Europäisches Patentamt

European Patent Office

Office européen des brevets

(19)

(11) Veröffentlichungsnummer: **0 033 064**
**B1**

# EUROPÄISCHE PATENTSCHRIFT

(12)

(45) Veröffentlichungstag der Patentschrift:
**18.05.83**

(21) Anmeldenummer: **81100028.0**

(22) Anmeldetag: **07.01.81**

(51) Int. Cl.³: **D 21 H  3/38**, C 08 F  8/44,
C 08 F  212/08 // (C08F212/08,
220/34, 220/44)

(54) **Kationische Leimungsmittel für Papier.**

(30) Priorität: **25.01.80  DE 3002687**

(43) Veröffentlichungstag der Anmeldung:
**05.08.81 Patentblatt 81/31**

(45) Bekanntmachung des Hinweises auf die Patenterteilung:
**18.05.83 Patentblatt 83/20**

(84) Benannte Vertragsstaaten:
**AT BE CH DE FR GB IT LI NL SE**

(56) Entgegenhaltungen:
**US-A-2 964 445**

(73) Patentinhaber: **BAYER AG, Zentralbereich Patente,
Marken und Lizenzen, D-5090 Leverkusen 1, Bayerwerk
(DE)**

(72) Erfinder: **Probst, Joachim, Dr., Haferkamp 3,
D-5000 Köln 80 (DE)**
Erfinder: **Kolb, Günter, Dr.,
Heinrich-von-Kleist-Strasse 7, D-5090 Leverkusen 1 (DE)**
Erfinder: **Müller, Friedhelm, Dr., Zum Hahnenberg 62,
D-5068 Odenthal (DE)**
Erfinder: **Bäumgen, Heinz, Buchenweg 10,
D-5090 Leverkusen 1 (DE)**

## Kationische Leimungsmittel für Papier

Die vorliegende Erfindung betrifft Papierleimungsmittel auf der Basis von Terpolymerisaten aus Styrol, Acrylnitril und N,N-Dimethylaminoethyl(meth)acrylat, die durch Umsetzung mit Quaternierungsmitteln und Säuren in kationische wasserlösliche Polymerisate übergeführt worden sind.

In der US-A-2 964 445 wird die Copolymerisation von hydrophoben Monomeren wie Styrol oder substituierten Styrolen bzw. Estern der Acryl- oder Methacrylsäure mit Monomeren mit hydrophilen Eigenschaften wie Vinylpyridinen, N,N-Dimethylaminoethyl(meth)acrylat und 2-Dimethylamino-1-methylethyl(meth)acrylat sowie N,N-Dimethylaminoethylacrylamid und ihre Verwendung als Leimungsmittel für Papier beschrieben. Die im Copolymerisat enthaltenen basischen Gruppen werden durch Quaternierung mit üblichen Quaternierungsmitteln bzw. durch organische oder anorganische Säuren in wasserlösliche Salze überführt. So wird z.B. eine Copolymerisation beschrieben, bei der in Masse 23 Gew.-% N,N-Dimethylaminoethylmethacrylat und 77 Gew.-% Styrol eingesetzt werden. Es wird dabei nach der Quaternierung mit Benzylchlorid eine wässrige Teildispersion erhalten, bei der der grösste Anteil des Polymeren gelöst vorliegt. Beim Einsatz geringerer Mengen als ca. 20 Gew.-% N,N-Dimethylaminoethylmethacrylat oder -acrylat im Copolymeren steigt dagegen der dispergierte Anteil gegenüber dem echt gelösten Bestandteil immer mehr an. Solche Teildispersionen werden ebenfalls in den deutschen Offenlegungsschriften 1 546 236, 2 356 296 und 2 519 581 beschrieben.

Diese Teildispersionen, die meist Styrol als hydrophoben Bestandteil enthalten, sind oberhalb von ca. 20 Gew.-% N,N-Dimethylaminoethyl-(meth)acrylat im Copolymerisat relativ stabil; unterhalb von 20 Gew.-% einpolymerisierter tertiärer Aminoverbindung werden sie jedoch recht schnell instabil, d.h. es treten Polymerabscheidungen auf, die zu einer erheblichen Verschlechterung des Leimungseffektes sowie zu Störungen im Arbeitsablauf bei der Papierproduktion führen können. Ausserdem sind solche Teildispersionen meist nicht gefrierauftaustabil, d.h. nach Gefrieren und erneutem Auftauen z.B. bei der Lagerung verschwindet der Leimungseffekt teilweise oder völlig. Darüber hinaus können solche Teildispersionen zur Schaumbildung beim Verarbeiten führen, was im Arbeitsablauf hinderlich ist und zu inhomogen geleimten Papieren führen kann. Auch die pH-Stabilität dieser Leimungsmittel ist oft unzureichend; bereits bei pH-Werten von 7 bis 7,5 verschwindet der Leimungseffekt fast vollständig.

Es wurde nun gefunden, dass chemisch sehr regelmässig aufgebaute statistische Terpolymerisate aus N,N-Dimethylaminoethyl(meth)acrylat, Styrol und Acrylnitril, deren Aminogruppen vollständig in Ammoniumgruppen überführt worden sind, Leimungsmittel für Papier darstellen, die bei und unterhalb von 20 Gew.-% N,N-Dimethylaminoethyl(meth)acrylat im Copolymerisat scherstabile, gefrierauftaustabile, pH-stabile und nicht schäumende Lösungen bilden. Die Terpolymerisate werden mit üblichen Quaternierungsmitteln mindestens teilweise quaterniert und mit organischen oder anorganischen Säuren im wässrigen Medium gelöst.

Gegenstand der Erfindung ist ein kationisches Leimungsmittel für Papier in Form einer wässrigen Lösung eines quaternierten Aminogruppen und Styroleinheiten enthaltenden statistischen Copolymerisats, das dadurch gekennzeichnet ist, dass das Copolymerisat ein chemisch einheitlich aufgebautes Terpolymerisat aus

a) 8–20 Gew.-% N,N-Dimethylaminoethyl-acrylat und/oder -methacrylat,

b) 45–80, vorzugsweise 55–75 Gew.-% Styrol und

c) 8–35, vorzugsweise 10–30 Gew.-% Acrylnitril, ist

wobei die Summe der Komponenten a) – c) stets 100 Gew.-% beträgt und von den N,N-Dimethylaminogruppen des Terpolymerisates mindestens 10% quaterniert und die restlichen protoniert sind.

Der Aufbau chemisch einheitlicher Terpolymerisate wird dadurch erreicht, dass man bei vorgegebenem Gehalt an N-Dimethylaminoethyl(meth)acrylat das Comonomerverhältnis Styrol/Acrylnitril im Monomergemisch so wählt, dass die Zusammensetzung des Monomergemisches im Bereich zwischen der Zusammensetzung der beiden binären Azeotrope N,N-Dimethylaminoethyl-(meth)acrylat/Styrol und Styrol/Acrylnitril liegt. Der geeignete Bereich kann leicht mit Hilfe eines Dreieckskoordinatensystems ermittelt werden und wird so gewählt, dass die Zusammensetzung des Monomergemisches in der Nähe oder auf der Verbindungslinie zwischen den vorgenannten binären Azeotropen liegt.

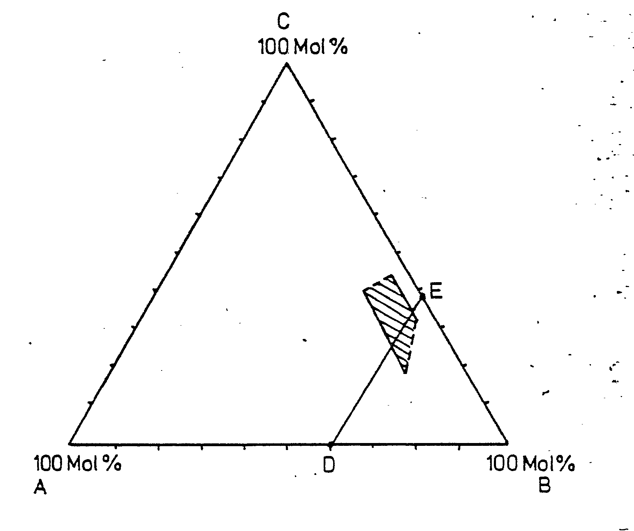

Abbildung 1 gibt ein derartiges Koordinatensystem wieder, dessen Eckpunkte A, B und C jeweils 100 Mol-% N,N-Dimethylaminoethylmethacrylat, Styrol bzw. Acrylnitril entsprechen. Die eingezeichnete Verbindungslinie verläuft zwischen Punkt D, der dem binären Azeotrop aus N,N-Dimethylaminoethylmethacrylat und Styrol entspricht, und Punkt E, der dem binären Azeotrop aus Acrylnitril und Styrol entspricht.

Die bevorzugten Mengenverhältnisse von Styrol und Acrylnitril bei vorgegebenem Gehalt an z.B. N,N-Dimethylaminoethylmethacrylat sind in Tabelle 1 aufgeführt. Dieser bevorzugte Bereich ist in Abb. 1 ebenfalls dargestellt.

Tabelle 1
Zusammensetzung der Monomergemische bei vorgegebenem Gehalt an
N,N-Dimethylaminoethylmethacrylat.

| Gehalt an N-Dimethyl-aminoethylmethacrylat [Gew.-%] | Gehalt an Styrol [Gew.-%] | Gehalt an Acrylnitril [Gew.-%] |
|---|---|---|
| 8 | 64–73 | 19–28 |
| 9 | 63–73 | 18–28 |
| 10 | 62–72 | 18–28 |
| 11 | 61–72 | 17–28 |
| 12 | 60–72 | 16–28 |
| 13 | 60–71,5 | 15,5–27 |
| 14 | 60–71 | 15–26 |
| 15 | 60–71 | 14–25 |
| 16 | 59–70 | 14–25 |
| 17 | 59–70 | 13–24 |
| 18 | 58–70 | 12–24 |
| 19 | 57–70 | 11–24 |
| 20 | 56–70 | 10–24 |

Die Copolymerisation kann in Substanz, Emulsion oder bevorzugt in Lösung erfolgen und sowohl diskontinuierlich als auch kontinuierlich oder im Monomerzulaufverfahren durchgeführt werden. Besonders bevorzugt sind kontinuierliches und Monomerzulaufverfahren. Bei letzterem wird das Lösungsmittel vorgelegt, auf die Polymerisationstemperatur eingestellt und das Gemisch der drei Monomeren gleichzeitig mit dem Initiator in das Lösungsmittel eingetropft. Nach einiger Zeit wird nachaktiviert und die Reaktion bis zu einem Umsatz von ca. 99,0% bis 99,9% vervollständigt.

Die Polymerisationstemperaturen können zwischen 50 und 150 °C liegen, bevorzugt zwischen 60 und 100 °C. Sie richten sich selbstverständlich nach der Art des verwendeten Initiators und dessen Halbwertszeit.

Als Initiatoren kommen die bei Polymerisationen üblichen, Radikale liefernden Verbindungen in Frage, z.B. Azoverbindungen wie Azoisobutyronitril oder Peroxide wie t-Butylperpivalat, t-Butylper-2-ethylhexanoat, Benzoylperoxid, t-Butylperbenzoat, Di-t-butylperoxid und Cumolhydroperoxid. Sie werden in Mengen von 0,1 bis 6 Gew.-%, bezogen auf das anfängliche Monomerengemisch eingesetzt. Bevorzugt sind Mengen von 0,1 bis 4 Gew.-%.

Als Reaktionsmedium für die Polymerisation in Lösung kommen mit Wasser mischbare und nicht mischbare organische Lösungsmittel in Betracht. Mischbar sind z.B. Alkohole wie Ethanol, Isopropanol, Ketone wie Aceton, Ethylmethylketon, Ester wie Methylglykolacetat, sowie Dioxan und N,N-Dimethylformamid, nicht mischbar sind z.B. Aromaten wie Benzol, Toluol und Xylol. Bevorzugt werden mit Wasser mischbare Lösungsmittel.

Um möglichst wenig Lösungsmittel in die endgültige wässrige Lösung einzubringen, empfiehlt sich eine Polymerisation in hoher Lösungskonzentration von ca. 50 bis 80 Gew.-% des Endpolymeren.

Bei diesen Konzentrationen entstehen hochviskose Polymerlösungen; teilweise fallen die Polymeren während der Polymerisation in stark gequollenem Zustand an bzw. aufgrund ihrer Schwerlöslichkeit aus.

Die erfindungsgemässen statistischen Terpolymerisate sind chemisch sehr einheitlich aufgebaut, d.h. im Verlauf der Polymerisation erfolgt der Einbau der Monomeren in annähernd gleichbleibenden Mengenverhältnissen. Wie im Beispiel 3 dieser Anmeldung gezeigt wird, kann dies sowohl durch die Analyse von während der Polymerisation entnommenen Proben bestätigt werden als auch durch Simultation des Polymerisationsablaufs durch ein Rechenprogramm.

Die mittleren Molgewichte dieser Terpolymerisate liegen zwischen 3000 und 100 000, was mit der Gelpermeationschromatographie (GPC) nach einer Methode von Benoît et al. (J. Polymer-Sci., Part B, Polymer Letters 5 (1967) S. 753) bzw. bei Molgewichten unter 15 000 dampfdruckosometrisch bestimmt werden kann. Bevorzugt liegen die mittleren Molgewichte $M_{GPC}$ zwischen 10 000 und 70 000 und die Grenzviskositäten zwischen ca. 0,08 dl/g und 0,60 dl/g, gemessen in Tetrahydrofuran. Terpolymerisate mit Grenzviskositäten unter 0,08 dl/g führen zu weniger wirksamen Leimungsmitteln, solche mit höherer Grenzviskosität als 0,60 dl/g besitzen zu hohe Lösungsviskositäten. Die Uneinheitlichkeiten $U = (Mw/Mn)-1$ liegen zwischen 0,5 und 2,5, was wiederum aus GPC-Messungen abgeschätzt werden kann, wobei $Mw$ das gewichtsmässig durchschnittliche Molekulargewicht, d.h. den Quotienten aus dem Gewicht aller Moleküle durch die Zahl aller Moleküle bedeuten. Diese geringe molekulare Uneinheitlichkeit ist u.a. auf die sehr geringe chemische Uneinheitlichkeit der Terpolymerisate zurückzuführen.

Im Anschluss an die Polymerisation erfolgt die Quaternierung der N,N-Dimethylaminogruppen, die vorteilhaft in dem schon zur Polymerisation verwendeten organischen Lösungsmittel durchgeführt wird. Geeignete Quaternierungsmittel sind beispielsweise Alkyl- und Aralkylhalogenide wie Methylchlorid, Methylbromid, Butylbromid und Benzylchlorid, weitere Halogenverbindungen wie Propargylchlorid, Allylchlorid und Chloressigsäureethylester, Epihalogenhydrine wie Epichlorhydrin, Epibromhydrin und Methylepichlorhydrin sowie als Alkylierungsmittel geeignete Ester wie Dimethylsulfat und p-Toluolsulfonsäuremethylester. Es ist auch möglich Mischungen dieser Quaternierungsmittel einzusetzen. Bevorzugt sind Epihalogenhydrine insbesondere Epichlorhydrin.

Die Quaternierung bewirkt eine Verbesserung des Leimungseffektes und führt zu einer erheblichen Stabilitätssteigerung gegenüber pH-Änderungen der Lösungen. Während z.B. nicht quaternierte, nur mit Säuren umgesetzte kationische Oberflächenleimungsmittel auf der Basis von N,N-Dimethylaminoethyl(meth)acrylat/Styrol/Acrylnitril bei pH-Werten um und über 7,5 ihre Leimungswirkung verlieren, erhält man bei den erfindungsgemäss quaternierten Polykationen pH-Stabilitäten bis pH 8–9, im Falle des Epichlorhydrins sogar bis pH 10.

Die Quaternierungsmittel werden den Polymerisatlösungen in solchen Mengen zugesetzt, dass auf ein Mol Aminogruppe 0,3 bis 2,0 Mol Quaternierungsmittel entfallen. Bevorzugt sind Molverhältnisse von 1:0,5 bis 1:1,2 (Aminogruppe: Quaternierungsmittel). Die Quaternierungen erfolgen zwischen 25 und 120 °C, bevorzugt bei 40 bis 70 °C. Die Quaternierungsgrade, d.h. der Anteil an quaterniertem Amin zu den insgesamt vorliegenden Aminogruppen, liegt zwischen 10 und 100%. Die Reaktionszeiten liegen zwischen 0,5 und 10 Stunden.

Besonders niedrig liegen der Quaternierungsgrad und die Reaktionszeit im Falle des Epichlorhydrins, bei dem ein Quaternierungsgrad von 40% meist nicht überschritten wird, was durch Chlorbestimmung des ausgefällten Polymerisats und durch Titration der nicht quaternierten Amingruppen gezeigt werden kann. Bei weitergehender Reaktion mit Epichlorhydrin kann es zur Gelierung des Terpolymeren kommen. Diese Gelierung wird durch rechtzeitige Säurezugabe verhindert.

In der US-A-3 694 393 wird die Quaternierung mit Epichlorhydrin im wässrigen Medium nach dem Ansäuern von Polyaminen aus (Meth)acrylsäureestern und N,N-Dimethylaminoethylmethacrylat beschrieben. Die Quaternierungsreaktion läuft bei Raumtemperatur ab, dauert sehr lange und muss zu hohen Quaternierungsgraden von ca. 90% führen, damit gute Leimungseffekte erhalten werden. In der DT-A-2 216 458 werden ebenfalls Quaternierungen im wässrig-sauren Medium bei Temperaturen um 80 °C beschrieben; auch sie dauern meist mehrere Stunden, und die Umsätze sind ebenfalls sehr hoch.

Bei der vorliegenden Erfindung erfolgt die Quaternierung mit Epichlorhydrin dagegen in organischem Medium bei wesentlich milderen Bedingungen (25 bis 50 °C) in wesentlich kürzeren Zeiten (0,25 bis 2 Stunden). Die Quaternierungsgrade liegen bei ca. 10 bis 40%, sind also nicht so hoch wie die vorgenannten, ergeben jedoch mindestens ebenso gute Leimungswirkungen.

Um gut wasserlösliche Leimungsmittel zu erhalten und um nach nicht vollständiger Quaternierung die noch freien Aminogruppen zu protonieren, werden noch wasserlösliche organische oder anorganische Säuren zugesetzt. Als Säuren kommen in Betracht: Ameisensäure, Essigsäure, Propionsäure, Milchsäure, Salzsäure, Salpetersäure, Schwefelsäure und Phosphorsäure. Besonders bevorzugt sind Ameisensäure, Essigsäure und Salzsäure. Die Säuren werden in Mengen von 50 bis 500 Molprozent, bezogen auf die im Polymerisat gebundenen tertiären Aminogruppen, zugegeben. Bevorzugt sind 100 bis 300 Molprozent Säure. Im Falle des Epichlorhydrins als Quaternierungsmittel unterbricht man durch diese Säurezugabe gleichzeitig Polyadditionen und daraus folgende Gelierungsreaktionen.

Als Lösungsmittel für das Leimungsmittel dient im allgemeinen Wasser. Nach Auflösen des Polykations hierin liegen etwa 10 bis 30 gew.-%ige, bevorzugt 15 bis 25 gew.-%ige Lösungen, vor. Die darin noch enthaltenen, mit Wasser mischbaren organischen Lösungsmittel können in der Lösung verbleiben. Sie können aber auch destillativ unter Anlegen eines leichten Vakuums zusammen mit den Restmonomeren Styrol und Acrylnitril entfernt werden. Hierbei ist es von Vorteil, solche mit Wasser mischbaren Lösungsmittel einzusetzen, deren Siedepunkte unterhalb denen des Wassers liegen. In diesem Fall ist eine nahezu quantitative Entfernung des organischen Lösungsmittels möglich.

Bei mit Wasser nicht mischbaren Lösungsmitteln wie z.B. Aromaten ist deren Entfernung durch Wasserdampfdestillation nach der Quaternierung zu empfehlen und anschliessend die Umsetzung des Polymeren mit Säure.

Die erfindungsgemässen Oberflächenleimungsmittel für Papier sind nach allen bei der Papierherstellung für die Oberflächen- und Masseleimung gebräuchlichen Arbeitsmethoden einsetzbar.

Die Vorteile gegenüber einem handelsüblichen Leimungsmittel gemäss DT-A-1 621 688, einem relativ instabilen Latex, sind pH-, Scher-, Thermo- und Gefrierauftaustabilität sowie die äusserst geringe Schaumneigung.

Die homogenen wässrigen Lösungen der erfindungsgemässen kationischen Leimungsmittel sind im Gegensatz zu den Dispersionen gemäss DT-A-1 621 688 problemlos zu verarbeiten; sie garantieren im Gegensatz zu heterogenen Leimungssystemen absolute Homogenität des geleimten Papiers. Sie zeigen auf praktisch allen Papieren gute bis hervorragende Leimungswirkung, wobei insbesondere die Leimung von Aluminiumsulfatfreiem Papier hervorzuheben ist. Hierbei ist besonders die hervorragende Leimung von kreidehaltigem Papier zu erwähnen.

Beispiele
Beispiele 1–4

Polymerisation

In einem 40 l-Rührautoklaven werden 5720 g Isopropanol vorgelegt. Der Autoklav wird gründlich mit Stickstoff gespült und danach auf 80 °C hochgeheizt.

Bei dieser Temperatur werden die Mischungen I und die Lösungen II der Tabelle 2 innerhalb von ca. 4 Stunden unter Luftausschluss zudosiert. Dann wird 1 bis 2 Stunden nachgerührt, danach mit III (vgl. Tabelle 2) nachaktiviert. Daraufhin wird ca. 8 bis 12 Stunden bei 80 °C nachgerührt.

Tabelle 2

| Beispiel | | 1 | 2 | 3 | 4 |
|---|---|---|---|---|---|
| I. | N,N-Dimethylaminoethyl- | | | | |
| | methacrylat [g] | 3 217 | 2 573 | 2 257 | 1 592 |
| | Styrol [g] | 10 224 | 10 455 | 10 608 | 11 119 |
| | Acrylnitril [g] | 2 644 | 3 056 | 3 219 | 3 374 |
| II. | Azoisobutyronitril [g] | 530 | 550 | 600 | 500 |
| | Aceton [g] | 3 000 | 2 500 | 3 000 | 3 000 |
| III. | t-Butyl-per-2-ethyl-hexanoat [g] | 100– | | 100 | 119 |
| | Azoisobutyronitril [g] | – | 75 | – | – |
| | Aceton [g] | – | 300 | – | – |

Der regelmässige Aufbau der Polymeren kann durch Entnahme von Proben während der Polymerisation verfolgt werden. Die Proben werden mit Fällungsmitteln ausgefällt, getrocknet und auf ihre Zusammensetzung untersucht. Letztere wird am besten elementaranalytisch oder nach Eichung IR-spektrometrisch bestimmt (vgl. Tabelle 3).

Die hierbei gefundene mittlere Zusammensetzung ist ein aufsummierter Wert, der durch Rechnersimulation bestätigt werden kann. Die Computerberechnung liefert dazu noch die eigentliche chemische Verteilung als integrale Häufigkeitsverteilung in Form der sich beim jeweiligen Umsatz momentan bildenden Zusammensetzung.

Tabelle 3
Chemische Heterogenität des Terpolymeren gemäss Beispiel 3 aus 14,0 Gew.-% N,N-Dimethylaminoethylmethacrylat, 66,0% Styrol und 20,0% Acrylnitril

| Umsatz [Gew.-%] | Gehalt an N,N-Dimethyl-aminoethylmethacrylat [Gew.-%] berechnet | | | Gehalt an Styrol [Gew.-%] berechnet | | | Gehalt an Acrylnitril [Gew.-%] berechnet | | |
|---|---|---|---|---|---|---|---|---|---|
| | gef. | durch-schn. | mom. | gef. | durch-schn. | mom. | gef. | durch-schn. | mom. |
| 2,7 | 15,2 | 13,7 | 13,7 | 66,7 | 66,9 | 66,8 | 18,1 | 19,4 | 19,5 |
| 5,6 | 14,7 | 13,7 | 13,7 | 66,6 | 66,8 | 66,8 | 18,7 | 19,5 | 19,5 |
| 7,4 | 14,3 | 13,7 | 13,7 | 66,2 | 66,8 | 66,7 | 19,5 | 19,5 | 19,6 |
| 15,6 | 14,7 | 13,7 | 13,8 | 66,8 | 66,7 | 66,6 | 18,5 | 19,6 | 19,6 |
| 35,8 | 14,5 | 13,8 | 13,9 | 66,0 | 66,6 | 66,3 | 19,5 | 19,6 | 19,8 |
| 56,4 | 15,2 | 13,9 | 14,0 | 65,0 | 66,4 | 66,0 | 19,8 | 19,7 | 20,0 |
| 94,8 | 14,7 | 14,0 | 14,3 | 65,7 | 66,1 | 65,2 | 19,6 | 19,9 | 20,5 |

Quaternierung und Überführung in eine wässrige Lösung

Nach der Polymerisation wird auf 40 °C abgekühlt und die in Tabelle 4 angegebenen Mengen an Epichlorhydrin zudosiert. Es wird 1 Stunde bei 40 °C nachgerührt und danach mit den ebenfalls in Tabelle 4 angegebenen Mengen an Essigsäure versetzt. In einem 120 l-Vorratsgefäss, das mit einem Rührer versehen ist, werden ca. 63–65 l entionisiertes Wasser von einer Temperatur von ca. 50 bis 60 °C vorgelegt und der Inhalt des 40 l-Autoklaven hiermit vereinigt. Die Herstellung einer homogenen wässrigen Lösung erfolgt in kurzer Zeit bei intensivem Rühren. Die wässrigen Lösungen besitzen die ebenfalls in Tabelle 4 verzeichneten Eigenschaften.

### Tabelle 4

| Beispiel | 1 | 2 | 3 | 4 |
|---|---|---|---|---|
| IV. Epichlorhydrin [g] | 1896 | 1516 | 1330 | 938 |
| V. Essigsäure [g] | 2630 | 3300 | 2630 | 2375 |
| Konzentration [Gew.-%] | 22,6 | 19,5 | 20,3 | 20,5 |
| Viskosität (bei 20 °C) [mPa·s]* | 120–170 | – | 880–1200 | 400–480 |
| pH-Wert | 3,9 | 3,4 | 3,8 | 3,8 |
| Umsatz bezogen auf Monomere [Gew.-%] | 99,8 | 99,9 | 99,7 | 99,8 |
| Quaternierungsgrad [%] | 20 | 25 | 25 | 28 |
| Aussehen der Lösung | klar | klar | klar | leichter Schleier |

*Die Viskosität η ist keine Konstante, da Strukturviskosität vorliegt.

**Beispiele 5–8**

Die Herstellung des Terpolymerisates der Beispiele 5 bis 8 erfolgt wie in Beispiel 1 angegeben.

Danach werden die Ansätze auf die in Tabelle 5 angegebenen Temperaturen abgekühlt und die in Tabelle 5 ebenfalls angegebenen Quaternierungsmittel in den dort verzeichneten Mengen zudosiert und 4 bis 6 Stunden umgesetzt. Die anschliessende Auflösung mit 2375 g Essigsäure in 62 bis 68 l entionisiertem Wasser erfolgt analog den Beispielen 1 bis 4.

### Tabelle 5

| Beispiel | 5 | 6 | 7 | 8 |
|---|---|---|---|---|
| Quaternierungsmittel: | | | | |
| Dimethylsulfat [g] | 1306 | | | |
| p-Toluolsulfonsäuremethylester [g] | | 1555 | | |
| Chloressigsäureethylester [g] | | | 1887 | |
| Allylchlorid [g] | | | | 783 |
| Reaktionstemperatur [ °C] | 60 | 60 | 50 | 50 |
| Konzentration [Gew.-%] | 14,7 | 19,4 | 18,8 | 19,9 |
| Viskosität (bei 20 °C) [mPa·s]* | 850–1400 | 1050–1380 | 1100–1400 | 1100–1400 |
| pH-Wert | 2,6 | 2,7 | 3,6 | 4,0 |
| Umsatz bezogen auf | 99,8 | 99,9 | 99,9 | |
| Monomere [Gew.-%] | 99,7 | | | |
| Quaternierungsgrad [%] | 50 | 40 | 50 | 50 |
| Aussehen der Lösung | klar | klar | klar | klar |

*Die Viskosität ist keine Konstante, da Strukturviskosität vorliegt.

Bei den erfindungsgemässen Beispielen 1 – 8 werden klare wässrige Leimungsmittellösungen erhalten, die sich auch nach dem Abdestillieren der organischen Lösungsmittel Isopropanol und Aceton nur geringfügig eintrüben.

**Vergleichsbeispiele 9 – 12**

Anhand der Vergleichsbeispiele 9 bis 12 soll gezeigt werden, dass Terpolymere mit einer Zusammensetzung, die nicht in dem in Tabelle 1 angegebenen Bereich liegt, Teildispersionen bilden können, die zu Instabilitäten neigen, was zu Abscheidungen führen kann.

**Polymerisation:**

105 g Isopropanol werden in einem mit Stickstoff gründlich gespülten 2 l-Kolben, der mit einem wirksamen Rührer, einem Tropftrichter und einem Stickstoffeinlass versehen ist, vorgelegt. Es wird auf ca. 80–85 °C erhitzt und in 2 Stunden die in Tabelle 6 angegebenen Monomer- und Initiatormengen zugetropft. Es wird ca. 2 Stunden nachgerührt, danach mit 2 g t-Butyl-per-2-ethylhexanoat nachaktiviert und 10 Stunden bei 80–85 °C nachgerührt. Danach werden jeweils 30 g Ameisensäure und 0,9 bis 1,1 l entionisiertes Wasser zugegeben und das Terpolymere hierin gelöst. Man erhält die in Tabelle 6 angegebenen Lösungseigenschaften.

### Tabelle 6

| Beispiel | 9 | 10 | 11 | 12 |
|---|---|---|---|---|
| N,N-Dimethylaminoethylmethacrylat [g] | 48,2 | 42,7 | 37,4 | 32,1 |
| Styrol [g] | 188,3 | 188,5 | 192,9 | 197,4 |

Tabelle 6

| Beispiel | 9 | 10 | 11 | 12 |
|---|---|---|---|---|
| Acrylnitril [g] | 30,6 | 35,9 | 36,8 | 37,6 |
| Azoisobutyronitril [g] | 10 | 10 | 10 | 10 |
| Konzentration [Gew.-%] | 18,1 | 18,0 | 19,6 | 21,7 |
| Viskosität (bei 20 °C)* [m Pa·s] | 1800–7600 | 2300–3200 | 102–105 | 500–1600 |
| pH-Wert | 3,4 | 3,3 | 3,2 | 3,2 |
| Aussehen der Lösung | wenig trüb | trüb | trüb (nach einigen Tagen Bodensatz) | sehr trüb (Abscheidungen) |

* Wegen Strukturviskosität ist die Viskosität η keine Konstante.

An den Beispielen 9 bis 12 wird demonstriert, dass die Einhaltung der Monomerzusammensetzung gemäss Tabelle 1 umso kritischer ist, je geringer der Anteil an N,N-Dimethylaminoethylmethacrylat im Monomergemisch ist. Destilliert man das organische Lösungsmittel Isopropanol ab, trüben sich die Lösungen der Beispiele 9–12 noch mehr ein. Im Falle von Beispiel 10 tritt dann auch nach einigen Tagen etwas Bodensatz auf.

Im folgenden wird die Verwendung der vorstehend beschriebenen Leimungsmittel beispielhaft erläutert.

Als Leimungsflotte für die Oberflächenleimung wird eine Lösung von 5 Gew.-% Stärke (Perfectamyl $^R$ A4692 der Firma AVEBE) und 0,25 bzw. 0,5 Gew.-% des zu prüfenden Leimungsmittels (berechnet als Wirksubstanz) in 94,75 bzw. 94,5 Gew.-% Wasser verwendet.

Für die Leimung wird eine Laborleimpresse der Firma Werner Mathis, Zürich, Type HF eingesetzt. Die Leimungsflotte hat in der Leimpresse eine Temperatur von ca. 20 °C. Das Papier wird mit einer Geschwindigkeit von 4 m/Min. durchgezogen.

Die Trocknung der oberflächengeleimten Papiere erfolgt auf einem Trockenzylinder innerhalb von ca. 45 sec. bei ca. 100 °C. Vor der Leimungsprüfung werden die Papiere 2 Stunden bei Raumtemperatur klimatisiert. Abschnitte der Papiere werden dann vorgewogen, 1 Min. lang in Wasser von 20 °C getaucht, zwischen Filterpapier mittels eines 10 kg-Rollgewichts einmal abgepresst und zurückgewogen.

Aus der Gewichtsdifferenz wird der Wert für die beidseitige Wasseraufnahme in g/m² errechnet. Je geringer die Wasseraufnahme, desto besser ist die Wirkung des geprüften Leimungsmittels. Eine gute Leimung liegt vor, wenn eine Wasseraufnahme von ca. 40 g/m² und weniger erreicht wird.

Anwendungsbeispiel 1

Dieses Beispiel zeigt die gute Wirksamkeit einiger Leimungsmittel auf Aluminiumsulfat-freiem Papier.

Das verwendete Rohpapier hat folgende Zusammensetzung und Eigenschaften: 50 Gew.-% Nadelholzzellstoff, 50 Gew.-% Laubholzzellstoff; 9,5 Gew.-% Clay-Asche, pH-Wert im Stoffauflauf: 7,5; Nassaufnahme in der Laborleimpresse: ca. 80 Gew.-%; Papiergewicht: 80 g/m².

Tabelle 7

Oberflächenleimung auf Aluminiumsulfat-freiem Papier

| Leimungsmittel: | Wasseraufnahme in g/m² bei Zusatz von | |
|---|---|---|
| | 0,25 Gew.-% | 0,5 Gew.-% |
| | Leimungsmittel (bezogen auf reine Wirksubstanz) zur Flotte: | |
| 1 | 36,4 | 31,1 |
| 2 | 34,0 | 31,4 |
| 3 | 31,3 | 31,2 |
| 4 | 33,0 | 30,2 |
| 7 | 37,6 | 32,5 |

Ohne Leimungsmittel beträgt die Wasseraufnahme 89,0 g/m².

Anwendungsbeispiel 2

Dieses Beispiel zeigt die gute Wirksamkeit einiger Leimungsmittel auf Holzschliff-haltigem Papier.

Die Zusammensetzung und Eigenschaften dieses Papiers waren die folgenden:

40 Gew.-% Nadelholzzellstoff, 60 Gew.-% Holzschliff; 14,1 Gew.-% Clay-Asche, 2 Gew.-% Aluminiumsulfat; pH-Wert im Stoffauflauf: 4,5; Nassaufnahme: ca. 60 Gew.-%; Papiergewicht: ca. 80 g/cm².

Tabelle 8

Oberflächenleimung auf holzschliffhaltigem Papier

| Leimungsmittel: | Wasseraufnahme in g/m² bei Zusatz von | |
|---|---|---|
| | 0,25 Gew.-% | 0,5 Gew.-% |
| | Leimungsmittel (bezogen auf reine Wirksubstanz) zur Flotte: | |
| 1 | 38,7 | 30,4 |
| 2 | 34,6 | 30,8 |
| 3 | 35,3 | 30,8 |
| 4 | 30,9 | 28,3 |
| 7 | 39,8 | 32,1 |

Ohne Leimungsmittel beträgt die Wasseraufnahme 93,5 g/m².

**Anwendungsbeispiel 3**

Dieses Beispiel demonstriert den guten Effekt der beschriebenen Leimungsmittel auf Calciumcarbonathaltigem Papier.

Zusammensetzung und Eigenschaften dieses Papiers: 50 Gew.-% Nadelholzzellstoff, 50 Gew.-% Laubholzzellstoff; 7,9 Gew.-% Kreide-Asche, pH-Wert im Stoffauflauf: 7,5; Nassaufnahme: ca. 80 Gew.-%; Papiergewicht: 75 g/m².

Tabelle 9
Oberflächenleimung auf Calciumcarbonat-haltigem Papier.

| Leimungs-mittel: | Wasseraufnahme in g/m² bei Zusatz von | |
| --- | --- | --- |
| | 0,25 Gew.-% | 0,5 Gew.-% |
| | Leimungsmittel (bezogen auf reine Wirksubstanz) zur Flotte: | |
| 1 | 37,2 | 34,7 |
| 2 | 38,2 | 33,7 |
| 3 | 33,9 | 32,4 |
| 4 | 32,9 | 32,1 |
| 7 | 38,1 | 34,2 |

Ohne Leimungsmittel beträgt die Wasseraufnahme 78,7 g/m².

**Anwendungsbeispiel 4**

In diesem Beispiel werden die Leimungsmittel 1–4 im Hinblick auf ihre pH-unabhängige Leimungswirkung mit einem handelsüblichen kationischen «Leimungsmittel K» gemäss DT-A-1 621 688 verglichen.

Hierzu wird das in Anwendungsbeispiel 1 beschriebene Rohpapier verwendet. Dazu wird wiederum die beidseitige Wasseraufnahme sowohl beim sich von selbst einstellenden pH-Wert (pH 5,9–6,2) als auch bei einem pH-Wert von 8,0 in der Flotte gemessen. Der Leimungsgrad wird bei Zusatz von 0,25 Gew.-% Wirksubstanz zur Flotte gemessen.

Tabelle 10
Oberflächenleimung in Abhängigkeit vom pH-Wert der Flotte im Vergleich zu einem handelsüblichen Leimungsmittel K

| Leimungs-mittel: | Wasseraufnahme in g/m² bei | |
| --- | --- | --- |
| | pH 5,9–6,2 | pH 8,0 |
| K | 32,1 | 56,0 |
| 1 | 31,3 | 30,4 |
| 2 | 35,0 | 32,1 |
| 3 | 30,9 | 31,7 |
| 4 | 32,3 | 30,7 |

Es zeigt sich hierbei ganz deutlich, dass der Leimungseffekt der Leimungsmittel 1–4 auch bei einem pH-Wert von 8,0 voll erhalten bleibt, während das handelsübliche Leimungsmittel K hierbei nur noch geringe Leimungswirkung zeigt.

**Anwendungsbeispiel 5**

Dieses Beispiel zeigt die Verwendbarkeit der beschriebenen Leimungsmittel in der Papiermasse.

In einem Papierstoff aus 50 Gew.-% Birkensulfat- und 50 Gew.-% Kiefernsulfatzellstoff werden bei einer Stoffdichte von 0,5 Gew.-% und einem pH-Wert von 6,9 unter Rühren 1 bzw. 2 Gew.-% Leimungsmittel (Wirksubstanz bezogen auf trokkenen Zellstoff) zugesetzt.

Sofort anschliessend werden auf einem Laborblattbildner Papierblätter gebildet, die bei 100 °C getrocknet werden und ein Flächengewicht von ca. 100 g/m² haben.

Die Leimungswirkung wird wiederum durch die beidseitige Wasseraufnahme bestimmt.

Zum Vergleich wird wiederum das kationische «Leimungsmittel K» herangezogen (vgl. Anwendungsbeispiel 4).

Tabelle 11
Vergleich der Leimungsmittel 1–4 mit einem handelsüblichen Leimungsmittel K beim Einsatz in der Papiermasse

| Leimungs-mittel: | Wasseraufnahme in g/m² bei Zusatz von | |
| --- | --- | --- |
| | 1,0 Gew.-% | 2,0 Gew.-% |
| | Leimungsmittel (bezogen auf Wirksubstanz) zur Papiermasse: | |
| K | 44,6 | 43,2 |
| 1 | 43,8 | 37,7 |
| 2 | 52,0 | 40,5 |
| 3 | 43,0 | 43,0 |
| 4 | 44,6 | 43,1 |

**Patentansprüche**

1. Kationisches Leimungsmittel in Form einer wässrigen Lösung eines quaternierte Aminogruppen und Styroleinheiten enthaltenden statistischen Copolymerisats, dadurch gekennzeichnet, dass das Copolymerisat ein chemisch einheitlich aufgebautes Terpolymerisat aus

a) 8–20 Gew.-% N,N-Dimethylaminoethylacrylat und/oder N,N-Dimethylaminoethylmethacrylat,

b) 45–80 Gew.-% Styrol und

c) 8–35 Gew.-% Acrylnitril ist, wobei die Summe von a) bis c) stets 100 Gew.-% beträgt und mindestens 10% der Dimethylaminogruppen des Terpolymerisats quaterniert und die restlichen Dimethylaminogruppen protoniert sind.

2. Leimungsmittel gemäss Anspruch 1, dadurch gekennzeichnet, dass das Terpolymerisat aufgebaut ist aus

a) 8–20 Gew.-% N,N-Dimethylaminoethylacry- lat und/oder N,N-Dimethylaminoethylmethacrylat,

b) 55–75 Gew.-% Styrol und

c) 10–30 Gew.-% Acrylnitril

wobei die Summe von a) bis c) stets 100 Gew.-% beträgt.

3. Leimungsmittel gemäss Anspruch 1 und 2, dadurch gekennzeichnet, dass die Dimethylaminogruppen durch Umsetzung mit Propargylchlorid, Methylchlorid, Methylbromid, Methyljodid, Butylbromid, Dimethylsulfat, Benzylchlorid, p-Toluolsulfonsäuremethylester, Chloressigsäureethylester, Allylchlorid, Epichlorhydrin, Epibromhydrin oder Methylepichlorhydrin quaterniert worden sind.

4. Leimungsmittel gemäss Anspruch 1–3, dadurch gekennzeichnet, dass die nichtquaternierten Dimethylaminogruppen durch Umsetzung mit Ameisensäure, Essigsäure, Propionsäure, Milchsäure, Salzsäure, Salpetersäure, Phosphorsäure oder Schwefelsäure protoniert worden sind.

**Revendications**

1. Agent cationique de collage sous la forme d'une solution aqueuse d'un copolymérisat statistique contenant des groupes amino quaternaires et des motifs de styrène, caractérisé en ce que le copolymérisat est un terpolymérisat à structure chimique uniforme

a) de 8 à 20% en poids d'acrylate de N,N-diméthylaminoéthyle et/ou de méthacrylate de N,N-diméthylaminoéthyle,

b) de 45 à 80% en poids de styrène et

c) de 8 à 35% en poids d'acrylonitrile, la somme de a) à c) s'élevant toujours à 100% en poids et au moins 10% des groupes diméthylamino du terpolymérisat étant quaternisés, les groupes diméthylamino restants étant protonisés.

2. Agent de collage suivant la revendication 1, caractérisé en ce que le terpolymérisat est édifié à partir

a) de 8 à 80% en poids d'acrylate de N,N-diméthylaminoéthyle et/ou de méthacrylate de N,N-diméthylaminoéthyle

b) de 55 à 75% en poids de styrène et

c) de 10 à 30% en poids d'acrylonitrile la somme de a) à c) s'élevant toujours à 100% en poids.

3. Agent de collage suivant les revendications 1 et 2, caractérisé en ce que les groupes diméthylamino ont été quaternisés par réaction avec le chlorure de propargyle, le chlorure de méthyle, le bromure de méthyle, l'iodure de méthyle, le bromure de butyle, le sulfate de diméthyle, le chlorure de benzyle, le p-toluènesulfonate de méthyle, le chloracétate d'éthyle, le chlorure d'allyle, l'épichlorhydrine, l'épibromhydrine ou la méthylépichlorhydrine.

4. Agent de collage suivant les revendications 1 à 3, caractérisé en ce que les groupes diméthylamino non quaternisés ont été protonés par réaction avec l'acide formique, l'acide acétique, l'acide propionique, l'acide lactique, l'acide chlorhydrique, l'acide nitrique, l'acide phosphorique ou l'acide sulfurique.

**Claims**

1. Cationic sizing agent in the form of an aqueous solution of a statistical copolymer-containing quaternised amino groups and styrene units, characterised in that the copolymer is a terpolymer having a chemically uniform structure and consisting of

a) 8–20% by weight of N,N-dimethylaminoethyl acrylate and/or N,N-dimethylaminoethyl methacrylate,

b) 45–80% by weight of styrene and

c) 8–35% by weight of acrylonitrile,

the sum of a) to c) always being 100% by weight and at least 10% of the dimethylamino groups of the terpolymer being quaternised and the remaining dimethylamino groups being protonated.

2. Sizing agent according to Claim 1, characterised in that the terpolymer consists of

a) 8–20% by weight of N,N-dimethylaminoethyl acrylate and/or N,N-dimethylaminoethyl methacrylate,

b) 55–75% by weight of styrene and

c) 10–30% by weight of acrylonitrile,

the sum of a) to c) always being 100% by weight.

3. Sizing agent according to Claim 1 and 2. characterised in that the dimethylamino groups have been quaternised by reaction with propargyl chloride, methyl chloride, methyl bromide, methyl iodide, butyl bromide, dimethyl sulphate, benzyl chloride, p-toluene sulphonic acid methyl ester, chloracetic acid ethyl ester, allyl chloride, epichlorohydrin, epibromohydrin or methyl epichlorohydrin.

4. Sizing agent according to Claim 1–3, characterised in that the non-quaternised dimethylamino groups have been protonated by reaction with formic acid, acetic acid, propionic acid, lactic acid, hydrochloric acid, nitric acid, phosphoric acid or sulphuric acid.